# EUROPÄISCHE PATENTSCHRIFT

(11) **EP 0 775 548 B1**
(45) Veröffentlichungstag und Bekanntmachung des Hinweises auf die Patenterteilung: **12.05.1999**
(21) Anmeldenummer: 96113795.7
(22) Anmeldetag: 29.08.1996
(51) Int. Cl.: B23D 59/00, B27G 19/02

(54) **Kreissäge**
Circular saw
Scie circulaire

(30) Priorität: 25.11.1995 DE 19543977
(43) Veröffentlichungstag der Anmeldung: 28.05.1997
(73) Patentinhaber: FESTO Tooltechnic GmbH & Co., 73728 Esslingen (DE)
(72) Erfinder: Walter, Hartmut, Dipl.-Ing. (FH), 71332 Waiblingen (DE)
(74) Vertreter: Reimold, Otto, Dipl.-Phys.Dr.

(56) Entgegenhaltungen:
- EP-A- 0 014 869
- US-A- 4 285 257

## Beschreibung

Die Erfindung betrifft eine Kreissäge, mit einem Sägetisch zum Auflegen eines Werkstücks, einen unterhalb des Sägetisches gelagerten, beim Betrieb rotierenden Sägeblatt und einer den unterhalb des Sägetisches angeordneten Bereich des Sägeblattes aufnehmenden Schutzhaube, die ein Haubengehäuse mit einer Reinigungsöffnung an seiner Unterseite und eine der Reinigungsöffnung zugeordnete Schwenkklappe aufweist, die zwischen einer mit dem Haubengehäuse verriegelten Schließstellung, in der sie die Reinigungsöffnung verschließt und einer entriegelten Offenstellung, in der sie die Reinigungsöffnung freigibt, verschwenkbar ist; siehe z.B. EP-A-0 014 869.

Bei derartigen Kreissägen wird mit der Schutzhaube verhindert, daß der Benutzer unabsichtlich mit dem rotierenden Sägeblatt in Berührung kommen und sich verletzen kann. Im unteren Bereich eines solchen Schutzgehäuses sammeln sich regelmäßig von der Werkstückbearbeitung herrührende Staubpartikel und Sägespäne, die selbst im Falle einer an eine Staubabsaugung angeschlossene Schutzhaube liegenbleiben können. Um diese Späneansammlungen entfernen zu können, ist bei einer bekannten Kreissäge der oben genannten Art die Reinigungsöffnung mit der zugeordneten Schwenkklappe vorgesehen. Überführt man die Schwenkklappe in ihre Offenstellung, fallen der Staub und die Späne nach unten.

Die Schwenkklappe bringt allerdings die Gefahr mit sich, daß der Benutzer durch die Reinigungsöffnung greifen und mit dem Sägeblatt in Berührung gelangen kann. Um dieser Gefahr entgegenzuwirken, sind bei der bekannten Kreissäge etwas oberhalb der Reinigungsöffnung an den Innenseiten der Seitenwände des Haubengehäuses nach innen hin vorstehende Stege angeordnet, die sozusagen als Handeingriffssperre wirken. Diese Stege weisen jedoch andererseits den Nachteil auf, daß sie das Herabfallen größerer Späne behindern oder verhindern, so daß sich auf ihnen Späneansammlungen ergeben können, deren Entfernung verhältnismäßig mühselig ist.

Der vorliegenden Erfindung liegt daher die Aufgabe zugrunde, eine Kreissäge der eingangs genannten Art zu schaffen, bei der alle anfallenden Späne, auch große Späne, über die Reinigungsöffnung ohne Schwierigkeiten nach außen abgeführt werden können, wobei trotzdem eine Sicherheit dafür vorhanden sein soll, daß der Benutzer nicht unabsichtlich zum Sägeblatt greift.

Diese Aufgabe wird erfindungsgemäß dadurch gelöst, daß der Schwenkklappe eine Schwenkwinkel-Begrenzungseinrichtung zugeordnet ist, die zwischen einer wirksamen Stellung und einer unwirksamen Stellung verstellbar ist und in ihrer wirksamen Stellung bei entriegelter Schwenkklappe den Schwenkwinkel der Schwenkklappe auf einen mit Bezug auf die Offenstellung kleineren, einer Zwischenstellung der Schwenkklappe entsprechenden Wert begrenzt, so daß die Reinigungsöffnung nur mit einer Spaltbreite öffenbar ist, die einem einen Eingriff mit der Hand verhindernden Sicherheitsspalt entspricht.

Auf diese Weise wird der Sicherheitsspalt sozusagen vom Gehäuseinneren zur Schwenkklappe und der Reinigungsöffnung hin verlagert. Befindet sich die Schwenkklappe in der genannten Zwischenstellung, fallen die Späne normaler Größe ohne weiteres nach unten. Größere Späne bleiben zwar im Inneren der Schutzhaube, jedoch unmittelbar auf der Schwenkklappe, so daß sie sich ohne weiteres entfernen lassen, wenn man die Schwenkklappe wie seither in ihre vollständige Offenstellung schwenkt.

Bei einem bevorzugten Ausführungsbeispiel der Erfindung ist vorgesehen, daß die Schwenkwinkel-Begrenzungseinrichtung in der Schließstellung und der Zwischenstellung der Schwenkklappe nur mit einem Werkzeug zugänglich angeordnet ist. Auf diese Weise wird der Benutzer gezwungen, falls er die Schwenkklappe ganz öffnen möchte, ein Werkzeug zu Hilfe zu nehmen, so daß er gezielt vorgehen muß und dabei daran erinnert wird, die Kreissäge vorher abzuschalten.

Ferner ist es in jedem Falle zweckmäßig, daß an der Schwenkklappe eine die Schwenkklappe in Öffnungsrichtung beaufschlagende Federkraft angreift. In diesem Falle wird die Schwenkklappe, ist sie entriegelt, bei in ihrer wirksamen Stellung befindlicher Schwenkwinkel-Begrenzungseinrichtung definiert in ihrer Zwischenstellung gehalten.

Die erfindungsgemäß einstellbare Zwischenstellung der Schwenkklappe ermöglicht es ferner, daß die Innenseiten der Seitenwände der Schutzhaube im Bereich der Reinigungsöffnung zweckmäßigerweise frei von Handeingriffssperren sind.

Bei einer Kreissäge, bei der an der Schutzhaube ein Anschlußstutzen zum Anschließen eines Staubabsaugschlauchs vorgesehen ist, ist es ferner zweckmäßig, daß der Anschlußstutzen am Haubengehäuse angeordnet ist. Auf diese Weise bleibt der Anschlußstutzen unabhängig von der Stellung der Schwenkklappe an Ort und Stelle stehen. Würde sich der Anschlußstutzen an der Schwenkklappe befinden, könnten sich Schwierigkeiten bei der Handhabung ergeben.

Ein Ausführungsbeispiel der Erfindung wird nun anhand der Zeichnung erläutert. Es zeigen:
- Fig. 1: die Schutzhaube einer erfindungsgemäßen Kreissäge in Seitenansicht gemäß Pfeil I in Fig. 2 mit in ihrer Schließstellung befindlicher Schwenkklappe, wobei der Sägetisch und das Kreissägeblatt strichpunktiert angedeutet sind,
- Fig. 2: die Schutzhaube nach Fig. 1 im Querschnitt gemäß der Schnittlinie II-II in vergrößerter Darstellung,
- Fig. 3: den die Verriegelungsöffnung der Hauptverriegelungseinrichtung, mit der die Schwenkklappe in ihrer Schließstellung arretiert wird, enthaltenden Bereich A der Schwenkklappe in der Fig. 1 entsprechender Seitenansicht, ohne das am Haubengehäuse sitzende Verriegelungsglied,
- Fig. 4: die Anordnung nach Fig. 3 im Querschnitt gemäß der Schnittlinie IV-IV,
- Fig. 5: den einen der beiden gleich ausgebildeten Schwenkwinkel-Begrenzungseinrichtungen enthaltenden Bereich B in der Fig. 1 entsprechender Seitenansicht in vergrößerter Darstellung, wobei sich die Schwenkwinkel-Begrenzungseinrichtung wie in Fig. 1 in ihrer wirksamen Stellung befindet,
- Fig. 6: die Anordnung nach Fig. 5 im Querschnitt gemäß der Schnittlinie VI-VI,
- Fig. 7: die Schutzhaube der Kreissäge im der Fig. 2 entsprechenden Querschnitt in Teildarstellung, wobei sich die Schwenkklappe in ihrer Zwischenstellung befindet (entriegelte Hauptverriegelungseinrichtung und wirksame Schwenkwinkel-Begrenzungseinrichtung),
- Fig. 8: einen zur Fig. 7 parallelen und an der Stelle wie in Fig. 6 gelegten Querschnitt der Schwenkwinkel-Begrenzungseinrichtung bei in der Zwischenstellung befindlicher Schwenkklappe,
- Fig. 9: die die Schwenkklappe in Richtung vom Haubengehäuse weg beaufschlagende Federeinrichtung im zu den Fig. 2,4,6,7 und 8 parallelen Querschnitt gemäß der Schnittlinie IX-IX und
- Fig. 10: die Schwenkwinkel-Begrenzungseinrichtung in der Fig. 6 entsprechender Darstellungsweise, wobei der Drehriegel in seine unwirksame Stellung verdreht ist.

Die infrage stehende Kreissäge weist ein Standgestell auf, an dessen Oberseite ein horizontaler Sägetisch 1 angeordnet ist, auf den das zu sägende Werkstück aufgelegt wird. Unterhalb des Sägetisches befindet sich die Antriebseinheit der Kreissäge, die eine nur durch ein Kreuz angedeutete Werkzeugwelle 2 antreibt, auf der ein Kreissägeblatt 3 sitzt, das von unten her durch den Sägetisch 1 greift, so daß der oben aus dem Sägetisch 1 vorragende Sägeblattbereich den Sägeschnitt am Werkstück ausführt.

Der allgemeine Aufbau solcher Kreissägen ist weithin bekannt, so daß hierauf nicht weiter eingegangen wird.

Die Kreissäge weist ferner unterhalb des Sägetisches 1 eine Schutzhaube 4 auf, in die das Sägeblatt 3 von oben her eintaucht, so daß der unterhalb des Sägetisches 1 angeordnete Sägeblattbereich im Innenraum 5 der Schutzhaube 4 umläuft und von dieser somit umschlossen wird, so daß man sich nicht unabsichtlich am rotierenden Sägeblatt verletzen kann.

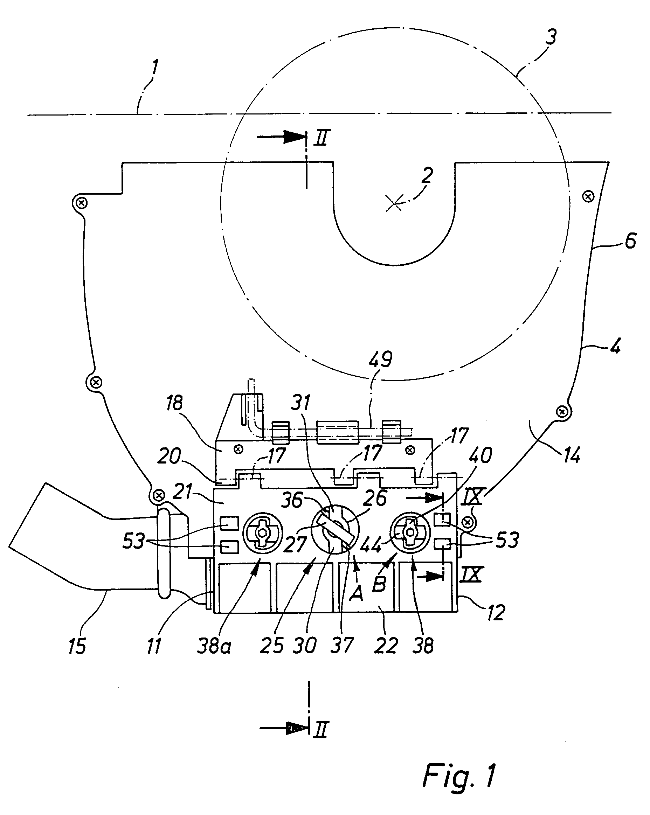

Die Schutzhaube 4 weist ein Haubengehäuse 6 auf, das an seiner Oberseite für den Eintritt des Kreissägeblattes 3 offen und an seiner Unterseite mit einer Reinigungsöffnung 7 versehen ist, der eine Schwenkklappe 8 zugeordnet ist. Die Reinigungsöffnung 7 weist längliche Gestalt mit parallel zur Sägeblattebene verlaufender Längsrichtung auf und wird seitlich von zwei zueinander parallelen Gehäusekanten 9,10 und endseitig von Stirnwänden 11, 12 des Haubengehäuses 6 begrenzt. Beim Ausführungsbeispiel ist die Unterseite, d.h. der Bodenbereich des Haubengehäuses 6 im Querschnitt halbkreisförmig, wobei sich die Reinigungsöffnung 7 etwa über einen Viertelkreisbogen erstreckt. Das Haubengehäuse 6 weist zwei im wesentlichen parallele Seitenwände 13,14 auf, die den Innenraum 5 seitlich begrenzen. In Seitenansicht (Fig. 1) hat das Haubengehäuse 6 eine sich nach unten zur Reinigungsöffnung 7 hin verjüngende Kontur.

Am Haubengehäuse 6 ist ferner ein Anschlußstutzen 15 zum Anschließen eines Staubabsaugschlauchs angeordnet. Der Anschlußstutzen 15 befindet sich beim Ausführungsbeispiel im Bereich der Unterseite des Haubengehäuses 6 und dabei an der Stirnwand 11, die dem Anschlußstutzen 15 entsprechend durchbrochen ist, so daß die beim Sägen entstehenden und in die Schutzhaube 4 gelangenden Sägespäne mittels eines außen angeschlossenen Staubsaugers abgesaugt werden können.

Die Schutzhaube 4 kann außen noch irgend welche angeformte Teile, so beispielsweise das kastenförmige Teil 16 aufweisen, was im vorliegenden Zusammenhang jedoch nicht weiter interessiert.

Beim zweckmäßigen Ausführungsbeispiel ist die Schwenkklappe 8 mit Abstand zur Reinigungsöffnung 7 oberhalb von dieser an der Außenseite der Seitenwand 14 des Haubengehäuses 6 mittels einer Schwenkachse 17 angelenkt, so daß sie sich von der Seitenwand 14 weg bzw. auf diese hin schwenken läßt. Die Schwenkachse 17 sitzt an einem außen an der Seitenwand 14 fest angebrachten Lagerteil 18. Dabei wird die Seitenwand 14 von einem mit dem sonstigen Haubengehäuse verschraubten Metallblechstück gebildet (es könnte auch aus Kunststoff gefertigt sein), auf das das Lagerteil 18 aufgeschraubt ist. Die Schwenkachse 17 ist beim Ausführungsbeispiel nicht durchgehend sondern in mehrere mit Abstand zueinander angeordnete Abschnitte unterteilt, über die jeweils ein nach oben ragender Schwenkklappenvorsprung 19 mit einem nach unten ragenden Lagervorsprung 20 des Lagerteils 18 gelenkig verbunden ist.

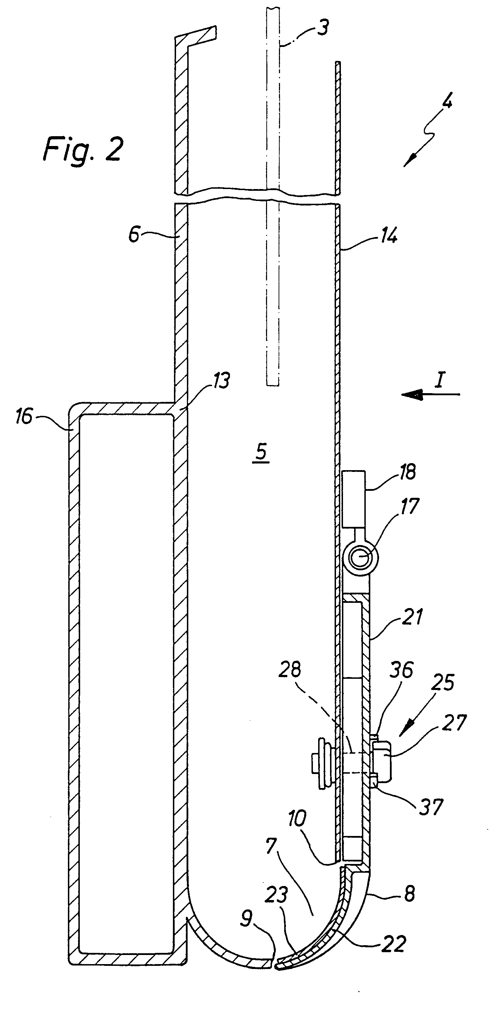

Die Schwenkklappe 8 bildet einen von der Schwenkachse 17 bis zur Reinigungsöffnung 7, d.h. bis zur von der Unterseite der Seitenwand 14 gebildeten Gehäusekante 10 entlang der Seitenwand 14 verlaufenden oberen Bereich 21, an den sich nach unten hin der Verschlußbereich 22 der Schwenkklappe 8 anschließt, der in der Schließstellung der Schwenkklappe die Reinigungsöffnung 7 verschließt (Fig. 2). Der Schwenkklappen-Verschlußbereich 22 ist beim Ausführungsbeispiel im Querschnitt der sonstigen Gestalt der Unterseite des Haubengehäuses 6 im wesentlichen viertelkreisförmig. Bei aus Kunststoff bestehender Schwenkklappe 8 kann deren Verschlußbereich 22 an seiner dem Schutzhauben-Innenraum 5 zugewandten Innenseite mit einem Metallblechstück 23 belegt sein.

Die Schwenkklappe 8 weist noch eine Anzahl von stegartigen Anformungen auf, die insbesondere zur Versteifung dienen. Dies ist bei derlei Kunststoffteilen üblich, so daß hierauf nicht weiter eingegangen wird.

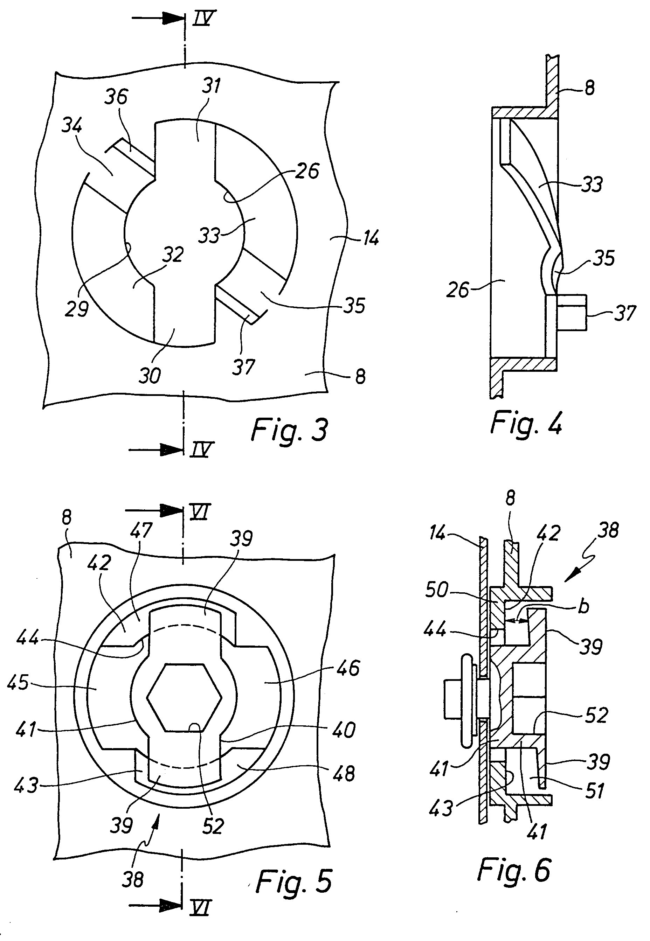

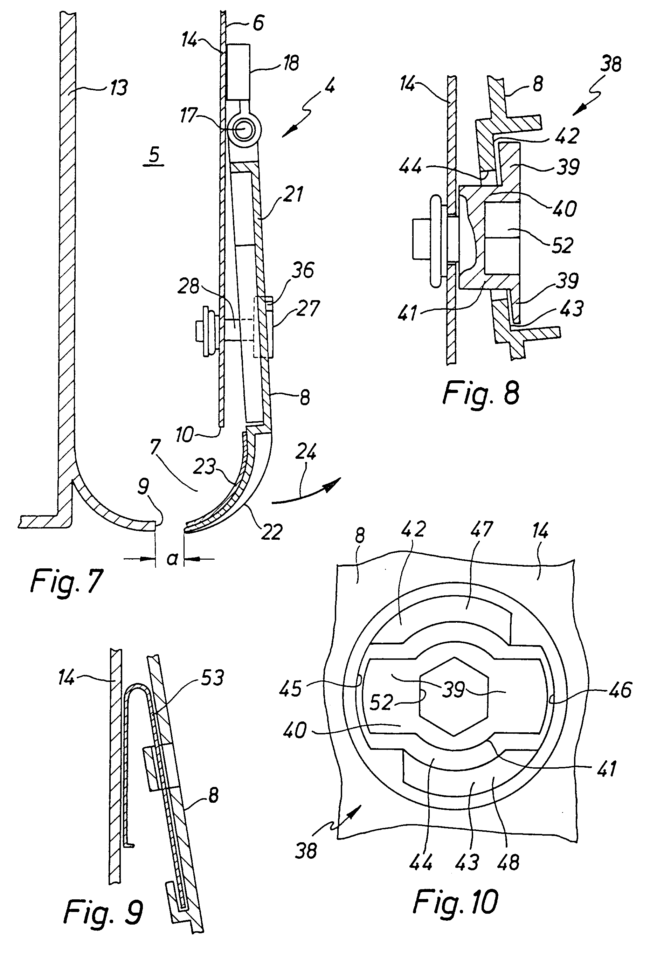

Die Schwenkklappe 8 kann in ihrer die Reinigungsöffnung 7 verschließenden Schließstellung mit dem Haubengehäuse 6 verriegelt werden. Der Innenraum 5 der Schutzhaube 4 ist dann unten, sieht man von dem Anschlußstutzen 5 ab, abgeschlossen. Entriegelt man die Schwenkklappe 8, kann sie in Richtung von der Haubengehäuse-Seitenwand 14 weg geschwenkt werden, so daß sich ihr Verschlußbereich 22 von der Reinigungsöffnung 7 entfernt und diese somit freigegeben wird. Bei geöffneter Schwenkklappe 8 können die anfallenden oder sich ansammelnden Sägespäne unabhängig von der Staubabsaugung nach unten aus der Schutzhaube 4 herausfallen bzw. entnommen werden. In Fig. 7 befindet die Schwenkklappe 8, wie im einzelnen noch beschrieben wird, in einer Zwischenstellung, in der die Reinigungsöffnung 7 nur eine Spaltbreite a weit offen ist, die einem Sicherheitsspalt entspricht und einen Eingriff mit der Hand verhindert. Die Schwenkklappe 8 kann also auch beim Betrieb der Kreissäge diese Zwischenstellung einnehmen, so daß einerseits die Späne herausfallen können und andererseits die Gefahr einer Verletzung des Benutzers vermieden wird. Aus dieser Zwischenstellung läßt sich die Schwenkklappe 8 in Richtung gemäß Pfeil 24 noch weiter öffnen, so daß die Reinigungsöffnung 7 bei ganz in die Offenstellung verschwenkter Schwenkklappe praktisch vollständig geöffnet ist, so daß auch verhältnismäßig große Späne herausfallen bzw. entnommen werden können. Zum Verriegeln der Schwenkklappe 8 in der Schließstellung mit dem Haubengehäuse 6 dient eine Hauptverriegelungseinrichtung 25, die von einer durchgehenden Verriegelungsöffnung 26 an der Schwenkklappe 8 und einem Verriegelungsglied 27 am Haubengehäuse 6, beim Ausführungsbeispiel an der Seitenwand 14, gebildet wird. Das Verriegelungsglied 27 ist außen an einem an der Seitenwand 14 verdrehbar gelagerten Zapfen 28 angeordnet und steht in radialer Richtung über diesen vor. Das Verriegelungsglied 27 ist ferner handgriffartig ausgebildet, so daß es mit der Hand ergriffen und verdreht werden kann. Die Verriegelungsöffnung 26 ist nicht rotationssymmetrisch geformt und dabei an die Gestalt des Verriegelungsglieds 27 angepaßt, so daß dieses in seiner zugehörigen Drehstellung durch die Verriegelungsöffnung 26 paßt. Es ergibt sich also ein schlüssellochartiges Aussehen der Verriegelungsöffnung 26. Beim Ausführungsbeispiel weist die Verriegelungsöffnung 26 beiderseits einer zentralen Öffnungspartie 29, durch die der Zapfen 28 geführt wird, der Gestalt des Verriegelungsglieds 27 entsprechend jeweils einen Querfortsatz 30 bzw. 31 auf, durch den das Verriegelungsglied 27 geführt werden kann. In den Fig. 3 und 4 ist das Verriegelungsglied 27 der Übersichtlichkeit wegen weggelassen worden. An jeden Querfortsatz 30,31 der Verriegelungsöffnung 26 schließt sich an einer Seite in Umfangsrichtung eine die zentrale Öffnungspartie 29 begrenzende Aufgleitfläche 32 bzw. 33 an, die schraubenartig ansteigt und an ihrem dem zugehörigen Querfortsatz 30 bzw. 31 der Verriegelungsöffnung 26 entgegengesetzten Ende mit einer Rastvertiefung 34 bzw. 35 und einem endseitigen Anschlag 36 bzw. 37 versehen ist. Geht man von der Offenstellung aus und will man die Schwenkklappe 8 in ihrer Schließstellung mit dem Haubengehäuse 6 verriegeln, dreht man das Verriegelungsglied 27 so, daß es eine mit der Verriegelungsöffnung 26 einschließlich der beiden Querfortsätze 30,31 korrespondierende Lage einnimmt, so daß man die Schwenkklappe 8 unter Hindurchführen des Verriegelungsglieds 27 durch die Verriegelungsöffnung 26 gegen das Haubengehäuse 6 halten kann. Anschließend verdreht man das Verriegelungsglied 27 so, daß es auf die beiden Aufgleitflächen 32,33 aufgleitet und damit die Schwenkklappe 8 verriegelt. Im verriegelten Zustand liegt das Verriegelungsglied 27 in den Rastvertiefungen 34, 35. Die Anschläge 36,37 verhindern, daß das Verriegelungsglied 27 unabsichtlich zu weit gedreht wird. Das Entriegeln erfolgt in umgekehrter Reihenfolge.

Diese Hauptverriegelungseinrichtung 25 ist, wie aus Fig. 1 hervorgeht, beim Ausführungsbeispiel etwa in halber Länge der Schwenkklappe 8 an deren oberem Bereich 21 angeordnet.

Sieht man von weiteren Maßnahmen ab, könnte die Schwenkklappe bei entriegelter Hauptverriegelungseinrichtung beliebig weit geöffnet werden. Wie bereits erwähnt, ist jedoch eine definierte Zwischenstellung (Fig. 7 und 8) der Schwenkklappe 8 vorgesehen, in der die Reinigungsöffnung 7 nur mit der Spaltbreite a geöffnet ist. Hierzu ist der Schwenkklappe 8 eine beim Ausführungsbeispiel in doppelter Ausführung vorhandene Schwenkwinkel-Begrenzungseinrichtung 38 bzw. 38a zugeordnet. Da diese beiden Schwenkwinkel-Begrenzungseinrichtungen 38,38a gleich ausgebildet sind, genügt nachstehend die Beschreibung beispielsweise der Begrenzungseinrichtung 38.

Die Schwenkwinkel-Begrenzungseinrichtung 38 ist zwischen einer wirksamen Stellung (Fig. 1,5,6 und 8) und einer unwirksamen Stellung (Fig. 10) verstellbar und begrenzt in ihrer wirksamen Stellung bei entriegelter Schwenkklappe 8, d.h. wenn das Verriegelungsglied 27 der Hauptverriegelungseinrichtung 25 in seine mit der Verriegelungsöffnung 26 einschließlich der Querfortsätze 30,31 korrespondierende Lage gedreht ist, den Schwenkwinkel der Schwenkklappe 8 auf einen mit Bezug auf die nicht dargestellte vollständige Offenstellung kleineren Wert, der der Zwischenstellung gemaß Fig. 7 entspricht.

Die Schwenkwinkel-Begrenzungseinrichtung 38 enthält eine Anschlaganordnung 39, die sich in ihrer wirksamen Stellung im Schwenkweg und in ihrer unwirksamen Stellung außerhalb des Schwenkwegs der Schwenkklappe 8 gefindet.

Dabei ist die Schwenkwinkel-Begrenzungseinrichtung 38 am Haubengehäuse 6, beim Ausführungsbeispiel an der Haubengehäuse-Seitenwand 14 angeordnet.

Im einzelnen weist die dargestellte Schwenkwinkel-Begrenzungseinrichtung 38 einen an der Haubengehäuse-Seitenwand 14 drehbar gelagerten Drehriegel 40 auf, der einen radial vorstehenden, die Anschlaganordnung 39 bildenden Riegelkörper trägt. Dem radial vorstehenden Riegelkörper 39 - beim Ausführungsbeispiel handelt es sich um zwei diametral zueinander von einem Zentralkörper 41 abstehende Riegelzungen - ist eine Widerlagerfläche 42, 43 an der Schwenkklappe 8 zugeordnet, wobei der Riegelkörper 39 in Seitenansicht quer zur Schwenkachse 17 der Schwenkklappe 8 gesehen in seiner wirksamen Stellung über die Widerlagerfläche 42,43 und in seiner unwirksamen Stellung neben die Widerlagerfläche 42,43 gedreht ist.

Bei mittels der Hauptverriegelungseinrichtung 25 in der Schließstellung gehaltenen Schwenkklappe 8 befindet sich der Riegelkörper 39 mit Abstand vor der Widerlagerfläche 42,43 (siehe insbesondere Fig. 6), wobei dieser Abstand (b) dem Schwenkwinkel der Schwenkklappe 8 zwischen ihrer Schließstellung und der Zwischenstellung entspricht.

Will man also die Schwenkklappe 8 aus ihrer Schließstellung in die Zwischenstellung überführen, verdreht man den Drehriegel 40 so, daß sein Riegelkörper 39 vor der Widerlagerfläche 42,43 angeordnet ist (wirksame Stellung). Entriegelt man dann die Hauptverriegelungseinrichtung 25, kann die Schwenkklappe 8 nach außen schwenken, jedoch nur so weit, bis die Widerlagerfläche 42,43 an dem Riegelkörper 39, d.h. an der von diesem gebildeten Anschlaganordnung anschlägt (siehe insbesondere Fig. 8).

Will man die Schwenkklappe 8 über ihre Zwischenstellung hinaus öffnen, verdreht man den Drehriegel 40 in seine unwirksame Stellung, so daß er nicht mehr an der Widerlagerfläche 42,43 anliegt, so daß die Schwenkklappe 8 an ihm in Richtung gemäß Pfeil 27 vorbeischwenken kann.

Beim Ausführungsbeispiel ist dem Drehriegel 40 eine Durchtrittsöffnung 44 an der Schwenkklappe 8 zugeordnet. Am Rand der Durchtrittsöffnung 44 ist die Widerlagerfläche 42,43 angeordnet. Wie bereits erwähnt, paßt der Drehriegel 40 in seiner unwirksamen Stellung durch diese Durchtrittsöffnung 44 und ist in seiner wirksamen Stellung mit der Widerlagerfläche 42,43 verriegelt. Die Durchtrittsöffnung 54 ist also nicht rotationssymmetrisch ausgebildet und paßt wie ein Schlüsselloch zum zugeordneten Schlüssel zum Drehriegel 40. Dabei weist die Durchtrittsöffnung 40 zwei seitliche Erweiterungen 45,46 auf, durch die die beiden den Riegelkörper 39 bildenden Zungen passen, wenn sich der Drehriegel 40 in der entsprechenden Drehlage befindet. In Umfangsrichtung neben jeder seitlichen Erweiterung 45,46 befindet sich ein Ringsteg 47 bzw. 48, wobei von den beiden Ringstegen 47,48 die Widerlagerfläche 42,43 gebildet wird, über die der Riegelkörper 39 in der wirksamen Stellung gedreht ist.

Die Schwenkwinkel-Begrenzungseinrichtung 38 ist zweckmäßigerweise so angeordnet, daß sie in der Schließstellung und in der Zwischenstellung der Schwenkklappe 8 nur mit einem Werkzeug 49 (in Fig. 1 strichpunktiert angedeutet) zugänglich ist. Zu diesem Zwecke kann die Durchtrittsöffnung 44 am Boden 50 einer Ausnehmung 51 der Schwenkklappe 8 angeordnet sein, die so bemessen ist, daß sie den Drehriegel 40 in seiner wirksamen Stellung vertieft aufnimmt, so daß er mit der Hand nicht verdreht werden kann. Am Drehriegel 40 ist eine Werkzeugangriffseinrichtung 52 ausgebildet, an der das Werkzeug 49 angesetzt werden kann. Beim Ausführungsbeispiel handelt es sich bei der Werkzeugangriffseinrichtung 52 um eine Mehrkant-Stirnausnehmung am Drehriegel 40. Dementsprechend handelt es sich bei dem Werkzeug 49 um einen Mehrkant.

An der Schutzhaube 4, beim Ausführungsbeispiel am Lagerteil 18, kann eine geeignete Halterung für das Werkzeug 49 vorgesehen werden. Die zu dieser Halterung gehörenden Teile sind der Übersichtlichkeit wegen nicht mit Bezugsziffern bezeichnet.

Wie bereits erwähnt, ist die Schwenkwinkel-Begrenzungseinrichtung in doppelter Ausführung vorhanden. Dabei gilt für die Begrenzungseinrichtung 38a das gleiche wie oben anhand der Begrenzungseinrichtung 38 erläutert worden ist. Die beiden Schwenkwinkel-Begrenzungseinrichtungen 38,38a befinden sich beiderseits der Hauptverriegelungseinrichtung 25.

An der Schwenkklappe 8 greift eine sie in Öffnungsrichtung (Pfeil 24) beaufschlagenden Federkraft an. Hierzu ist eine sich einerseits an der Seitenwand 14 des Haubengehäuses 6 und andererseits an der Schwenkklappe 8 abstützende Federeinrichtung 53 vorhanden, die zweckmäßigerweise von mindestens einer Blattfeder gebildet wird. Beim Ausführungsbeispiel ist an den beiden Längsendbereichen der Schwenkklappe 8 jeweils eine solche Federeinrichtung 53 vorhanden. Wie aus Fig. 9 hervorgeht, ist die die Federeinrichtung 53 bildende Blattfeder, die zwischen der Seitenwand 14 und der Schwenkklappe 8 angeordnet ist, V-förmig ausgebildet, wobei die beiden V-Schenkel an der Seitenwand 14 bzw. an der Schwenkklappe 8 anliegen. Die Federeinrichtung 53 hält die Schwenkklappe 8 in der Zwischenstellung (Fig.9) also gegen den Riegelkörper 39. Nach Überführen des Riegelkörpers 39 in seine unwirksame Stellung (Fig. 10) drückt die Federeinrichtung 53 die Schwenkklappe 8 noch weiter nach außen.

Aus den Querschnittsdarstellungen nach den Fig. 2 und 7 ist ersichtlich, daß die den Innenraum 5 begrenzenden Innenseiten der Seitenwände 13,14 der Schutzhaube 4 im Bereich der Reinigungsöffnung 7 frei von beispielsweise leistenförmigen Handeingriffssperren sind, so daß alle Späne, auch größere Späne, im Innenraum 5 ungehindert ganz nach unten fallen können.

## Patentansprüche

1. Kreissäge, mit einem Sägetisch zum Auflegen eines Werkstücks, einem unterhalb des Sägetischs (1) gelagerten, beim Betrieb rotierenden Sägeblatt (3) und einer den unterhalb des Sägetisches angeordneten Bereich des Sägeblatts aufnehmenden Schutzhaube (4), die ein Haubengehäuse (6) mit einer Reinigungsöffnung (7) an seiner Unterseite und eine der Reinigungsöffnung zugeordnete Schwenkklappe (8) aufweist, die zwischen einer mit dem Haubengehäuse verriegelten Schließstellung, in der sie die Reinigungsöffnung verschließt, und einer entriegelten Offenstellung, in der sie die Reinigungsöffnung freigibt, verschwenkbar ist, dadurch gekennzeichnet, daß der Schwenkklappe (8) eine Schwenkwinkel-Begrenzungseinrichtung (38,38a) zugeordnet ist, die zwischen einer wirksamen Stellung und einer unwirksamen Stellung verstellbar ist und in ihrer wirksamen Stellung bei entriegelter Schwenkklappe (8) den Schwenkwinkel der Schwenkklappe (8) auf einen mit Bezug auf die Offenstellung kleineren, einer Zwischenstellung der Schwenkklappe (8) entsprechenden Wert begrenzt, so daß die Reinigungsöffnung (7) nur mit einer Spaltbreite (a) öffenbar ist, die einem einen Eingriff mit der Hand verhinderndem Sicherheitsspalt entspricht.

2. Kreissäge nach Anspruch 1, dadurch gekennzeichnet, daß die Schwenkwinkel-Begrenzungseinrichtung (38,38a) eine Anschlaganordnung (39) enthält, die sich in ihrer wirksamen Stellung im Schwenkweg und in ihrer unwirksamen Stellung außerhalb des Schwenkwegs der Schwenkklappe (8) befindet.

3. Kreissäge nach Anspruch 1 oder 2, dadurch gekennzeichnet, daß die Schwenkwinkel-Begrenzungseinrichtung (38,38a) am Haubengehäuse (6) angeordnet ist.

4. Kreissäge nach Anspruch 3, dadurch gekennzeichnet, daß die Schwenkklappe (8) mit Abstand zur Reinigungsöffnung (7) oberhalb von dieser an der Außenseite einer Seitenwand (14) des Haubengehäuses (6) angelenkt ist und einen von der Schwenkachse (17) bis zur Reinigungsöffnung (7) entlang der Seitenwand (14) verlaufenden oberen Bereich (21) bildet, wobei die Schwenkwinkel-Begrenzungseinrichtung (38,38a) an der Haubengehäuse-Seitenwand (14) angeordnet ist.

5. Kreissäge nach Anspruch 4, dadurch gekennzeichnet, daß die Schwenkwinkel-Begrenzungseinrichtung (38,38a) einen an der Haubengehäuse-Seitenwand (14) gelagerten Drehriegel (40) aufweist, der einen radial vorstehenden Riegelkörper (39) trägt, dem eine Widerlagerfläche (42,43) an der Schwenkklappe (8) zugeordnet ist, wobei der Riegelkörper (39) in Seitenansicht quer zur Schwenkachse (17) der Schwenkklappe (8) gesehen in seiner wirksamen Stellung über die Widerlagerfläche (42,43) und in seiner unwirksamen Stellung neben die Widerlagerfläche (42,43) gedreht ist.

6. Kreissäge nach Anspruch 5, dadurch gekennzeichnet, daß dem Drehriegel (40) eine Durchtrittsöffnung (44) an der Schwenkklappe (8) zugeordnet ist, an deren Rand die Widerlagerfläche (42,43) angeordnet ist, wobei der Drehriegel (40) in seiner unwirksamen Stellung durch die Durchtrittsöffnung (44) paßt und in seiner wirksamen Stellung mit der Widerlagerfläche (42,43) verriegelt ist.

7. Kreissäge nach einem der Ansprüche 1 bis 6, dadurch gekennzeichnet, daß die Schwenkwinkel-Begrenzungseinrichtung (38,38a) in der Schließstellung und der Zwischenstellung der Schwenkklappe (8) nur mit einem Werkzeug (49) zugänglich angeordnet ist.

8. Kreissäge nach Anspruch 7, dadurch gekennzeichnet, daß die Durchtrittsöffnung (44) am Boden (50) einer den Drehriegel (40) in seiner wirksamen Stellung vertieft aufnehmenden Ausnehmung (51) der Schwenkklappe (8) angeordnet ist und am Drehriegel (40) eine Werkzeugangriffseinrichtung (52) ausgebildet ist.

9. Kreissäge nach einem der Ansprüche 1 bis 8, dadurch gekennzeichnet, daß an der Schwenkklappe (8) eine die Schwenkklappe (8) in Öffnungsrichtung beaufschlagende Federkraft angreift.

10. Kreissäge nach Anspruch 9, dadurch gekennzeichnet, daß eine sich einerseits an der Seitenwand (14) des Haubengehäuses (6) und andererseits an der Schwenkklappe (8) abstützende Federeinrichtung (53) vorhanden ist.

11. Kreissäge nach Anspruch 10, dadurch gekennzeichnet, daß die Federeinrichtung (53) von mindestens einer Blattfeder gebildet wird.

12. Kreissäge nach einem der Ansprüche 1 bis 11, dadurch gekennzeichnet, daß die Innenseiten der Seitenwände (13,14) des Haubengehäuses (6) im Bereich der Reinigungsöffnung (7) frei von Handeingriffssperren sind.

13. Kreissäge nach einem der Ansprüche 1 bis 12, wobei an der Schutzhaube ein Anschlußstutzen zum Anschließen eines Staubabsaugschlauches vorgesehen ist, dadurch gekennzeichnet, daß der Anschlußstutzen (15) am Haubengehäuse (6) angeordnet ist.

## Claims

1. Circular saw with a saw table for placing a workpiece, with a saw blade (3) supported below the saw table (1) and rotating during operation, and with a protective hood (4) containing the area of the saw blade lying below the saw table and comprising a hood housing (6) with a cleaning hole (7) at its bottom and an associated hinged flap (8) capable of swivelling between a closed position interlocked with the hood housing, in which it closes the cleaning hole, and a released open position, in which it makes the cleaning hole accessible, characterized in that the hinged flap (8) is associated with a swivel angle limiting device (38, 38a) movable between an active position and an inactive position and, in its active position, when the hinged flap (8) is released, limiting the swivel angle of the hinged flap (8) to a smaller value corresponding to an intermediate position of the hinged flap (8) relative to its open position, so that the cleaning hole (7) can only be opened to a gap width (a) commensurate with a safety gap preventing the entry of a hand.

2. Circular saw according to claim 1, characterized in that the swivel angle limiting device (38, 38a) contains a stop arrangement (39), which lies in the swivel path of the hinged flap (8) in its active position and outside its swivel path in its inactive position.

3. Circular saw according to claim 1 or 2, characterized in that the swivel angle limiting device (38, 38a) is mounted on the hood housing (6).

4. Circular saw according to claim 3, characterized in that the hinged flap (8) is pivoted at a distance from and above the cleaning hole (7) on the outside of a side wall (14) of the hood housing (6) and forms an upper area (21) extending along the side wall (14) between the swivel axis (17) and the cleaning hole (7), the swivel angle limiting device (38, 38a) being located on the side wall (14) of the hood housing.

5. Circular saw according to claim 4, characterized in that the swivel angle limiting device (38, 38a) is provided with a hasp (40) supported on the side wall (14) of the hood housing and carrying a radially projecting hasp body (39) associated with an abutment surface (42, 43) on the hinged flap (8), the hasp body (39), if viewed from the side at right angles to the swivel axis (17) of the hinged flap (8), being turned over the abutment surface (42, 43) in its active position and lying adjacent to the abutment surface (42, 43) in its inactive position.

6. Circular saw according to claim 5, characterized in that the hasp (40) is associated with an opening (44) in the hinged flap (8), at the edge of which the abutment surface (42, 43) is located, the hasp (40) matching the opening (44) in its inactive position and being locked to the abutment surface (42, 43) in its active position.

7. Circular saw according to any of claims 1 to 6, characterized in that the swivel angle limiting device (38, 38a) is only accessible with the aid of a tool (49) in the closed position and the intermediate position of the hinged flap (8).

8. Circular saw according to claim 7, characterized in that the opening (44) is located at the base (50) of a recess (51) of the hinged flap (8) into which the hasp (40) is sunk in its active position, and in that a tool engagement facility (52) is formed on the hasp (40).

9. Circular saw according to any of claims 1 to 8, characterized in that a spring force acting on the hinged flap (8) in the opening direction is applied to the hinged flap (8).

10. Circular saw according to claim 9, characterized in that a spring device (53) supported on the side wall (14) of the hood housing (6) at one end and on the hinged flap (8) at the other end is provided.

11. Circular saw according to claim 10, characterized in that the spring device (53) is represented by at least one leaf spring.

12. Circular saw according to any of claims 1 to 11, characterized in that the insides of the side walls (13, 14) of the hood housing (6) are free of hand entry barriers in the area of the cleaning hole (7).

13. Circular saw according to any of claims 1 to 12, wherein a connection for a dust extraction hose is provided on the protective hood, characterized in that the connection (15) is located on the hood housing (6).

## Revendications

1. Scie circulaire, comportant une table de sciage pour y poser dessus une pièce à usiner, comportant une lame de scie (3) tournant en service, montée au-dessous de la table de sciage (1), ainsi qu'un capot de protection (4), recevant la zone de la lame de scie située au-dessous de la table de sciage, lequel capot présente un boîtier de capot (6) avec une ouverture de nettoyage sur sa face inférieure et un clapet pivotant (8) associé à l'ouverture de nettoyage, lequel peut pivoter entre une position de fermeture verrouillée avec le boîtier de capot, dans laquelle il ferme l'ouverture de nettoyage, et une position ouverte déverrouillée dans laquelle il dégage l'ouverture de nettoyage, caractérisée en ce qu'au clapet pivotant (8) est associé un dispositif de limitation d'angle de pivotement (38, 38a), qui est réglable entre une position active et une position inactive et qui, dans sa position active, lorsque le clapet pivotant (8) est déverrouillé, limite l'angle de pivotement du clapet pivotant (8) à une valeur inférieure à celle de l'angle de la position ouverte, correspondant à une position intermédiaire du clapet pivotant (8), de manière que l'ouverture de nettoyage (7) ne puisse être ouverte qu'avec une largeur de fente (a), qui correspond à une fente de sécurité empêchant une intervention à la main.

2. Scie circulaire selon la revendication 1, caractérisée en ce que le dispositif de limitation d'angle de pivotement (38, 38a) contient un dispositif à butée (39) qui, dans sa position active, se trouve dans le parcours de pivotement et dans sa position inactive, se trouve à l'extérieur du parcours de pivotement du clapet pivotant (8).

3. Scie circulaire selon la revendication 1 ou 2, caractérisée en ce que le dispositif de limitation d'angle de pivotement (38, 38a) est monté sur le boîtier de capot (6).

4. Scie circulaire selon la revendication 3, caractérisée en ce que le clapet pivotant (8) est articulé à distance de l'ouverture de nettoyage (7), au-dessus de celui-ci, sur la face extérieure d'une paroi latérale (14) du boîtier de capot (6) et forme une zone supérieure (21) s'étendant depuis l'axe de pivotement (17) jusqu'à l'ouverture de nettoyage (7), le long de la paroi latérale (14), le dispositif de limitation d'angle de pivotement (38, 38a) étant monté sur la paroi latérale (14) du boîtier de capot.

5. Scie circulaire selon la revendication 4, caractérisée en ce que le dispositif de limitation d'angle de pivotement (38, 38a) comporte un verrou tournant (40), monté sur la paroi latérale (14) du boîtier de capot, qui porte un corps de verrou (39) dépassant radialement, auquel est associée une surface de butée (42, 43) sur le clapet pivotant (8), le corps de verrou (39), vu de côté transversalement à l'axe de pivotement (17) du clapet pivotant (8), étant tourné dans sa position active au-dessus de la surface de butée (42, 43) et dans sa position inactive, à côté de la surface de butée (42, 43).

6. Scie circulaire selon la revendication 5, caractérisée en ce qu'au verrou tournant (40) est associée une ouverture de passage (44) sur le clapet pivotant (8), sur le bord de laquelle est disposée la surface de butée (42, 43), le verrou tournant (40), dans sa position inactive, passant à travers l'ouverture de passage (44), et dans sa position active étant verrouillé avec la surface de butée (42, 43).

7. Scie circulaire selon l'une des revendications 1 à 6, caractérisée en ce que le dispositif de limitation d'angle de pivotement (38, 38a) en position de fermeture et en position intermédiaire du clapet pivotant (8) n'est accessible qu'avec un outil (49).

8. Scie circulaire selon la revendication 7, caractérisée en ce que l'ouverture de passage (44) est ménagée sur le fond (50) d'un évidement (51) du clapet pivotant (8), recevant encastré le verrou tournant (40) dans sa position active, et en ce qu'un dispositif d'attaque d'outil (52) est formé sur le verrou tournant (40).

9. Scie circulaire selon l'une des revendications 1 à 8, caractérisée en ce que, sur le clapet pivotant (8) agit une force de ressort sollicitant le clapet pivotant (8) dans le sens d'ouverture.

10. Scie circulaire selon la revendication 9, caractérisée en ce qu'un dispositif à ressort (53) de soutien est prévu d'une part sur la paroi latérale (14) du boîtier de capot (6) et d'autre part, sur le clapet pivotant (8).

11. Scie circulaire selon la revendication 10, caractérisée en ce que le dispositif à ressort (53) est constitué par au moins un ressort à lame.

12. Scie circulaire selon l'une des revendications 1 à 11, caractérisée en ce que les faces intérieures des parois latérales (13, 14) du boîtier de capot (6) ne comportent pas de dispositif empêchant l'intervention manuelle dans la zone de l'ouverture de nettoyage (7).

13. Scie circulaire selon l'une des revendications 1 à 12, dans laquelle une tubulure de raccord est prévue sur le capot de protection pour raccorder un tuyau d'aspirateur, caractérisée en ce que la tubulure de raccord (15) est montée sur le boîtier de capot (6).
